# EUROPÄISCHE PATENTSCHRIFT

(11) **EP 2 640 664 B1**
(45) Veröffentlichungstag und Bekanntmachung des Hinweises auf die Patenterteilung: **05.07.2017**
(21) Anmeldenummer: 11785593.2
(22) Anmeldetag: 16.11.2011
(51) Int. Cl.: C01D 5/16, C05D 1/02

(54) **VERFAHREN ZUR GEWINNUNG VON KALIUMSULFAT AUS DER BIODIESELPRODUKTION**
METHOD FOR RECOVERING POTASSIUM SULPHATE FROM BIODIESEL PRODUCTION
PROCÉDÉ D'EXTRACTION DE SULFATE DE POTASSIUM À PARTIR DE LA PRODUCTION DE BIODIESEL

(30) Priorität: 16.11.2010 DE 102010051512
(43) Veröffentlichungstag der Anmeldung: 25.09.2013
(73) Patentinhaber: Remondis Production GmbH, 44536 Lünen (DE)
(72) Erfinder: HÜBNER, Andreas, 99734 Nordhausen (DE); SCHIFFER, Alfred, 44534 Lünen (DE)
(74) Vertreter: Peters, Hajo
(86) Internationale Anmeldenummer: PCT/EP2011/005775
(87) Internationale Veröffentlichungsnummer: WO 2012/065731

(56) Entgegenhaltungen:
- EP-A2- 0 001 533
- JP-A- 9 327 688
- JP-A- 51 079 963
- SU-A1- 630 225
- US-A- 4 144 311

## Beschreibung

Die vorliegende Erfindung betrifft ein Verfahren zur Gewinnung von Kaliumsulfat in großer Reinheit aus Rückständen aus der Biodieselproduktion, sowie zur Durchführung dieses Verfahrens geeignete Anlagen.

Biodiesel ist ein biosynthetischer Kraftstoff. Er wird durch Umesterung von tierischen oder pflanzlichen Fettsäureglycolester mit Methanol gewonnen. In vielen Ländern wird Biodiesel gewöhnlichem mineralischen Diesel-Kraftstoff beigemischt. 2007 führte die Bundesrepublik Deutschland eine Beimischungspflicht von 4,4 % Biodiesel zu herkömmlichem Diesel ein und zahlreiche andere Länder haben entsprechende Rechtsvorschriften eingeführt. Dementsprechend ist in den letzten Jahren die Biodieselproduktion im hohen Maße angestiegen.

Mit dem Anstieg der Biodieselproduktion steigt natürlich ebenso die Menge an Prozessrückständen wie Schlämmen, die bei den Produktionsprozessen anfallen, deren wirtschaftlich günstige Aufarbeitung zu hochwertigen wieder einsetzbaren Stoffen aber eine bisher ungelöste Herausforderung darstellt. Diese Prozessrückstände umfassen Rückstandsschlämme, die bei einem Recycling eingesetzt werden können. Die in Recyclingverfahren einsetzbaren Schlämme weisen einen hohen Anteil an organischen Bestandteilen (ca. 5 % bis ca. 50 %) auf. Diese organischen Verunreinigungen verhindern den Einsatz aus den Prozessrückständen recycelter Stoffe in hochwertigeren Anwendungen, in denen definierte Substanzen notwendig sind und damit organische Verunreinigungen in undefinierter Zusammensetzung stören.

Einer der bei der Biodieselproduktion anfallenden Stoffe, dessen Wiederaufbereitung durchaus hohe wirtschaftliche Bedeutung besitzt, ist das Kaliumsulfat. Aus dem Stand der Technik sind verschiedene Verwendungen kaliumsulfathaltiger Rückstände aus der Biodieselproduktion bekannt. So schlägt beispielsweise die DE 10 2004 024 697 A1 vor, die anorganischen hydrophobierten Salze aus Feuerlöschpulverrückständen durch eine Vermengung mit ölhaltigen Rückständen als Dünger zugänglich zu machen. Einer der beschriebenen Ölzusätze, mit dem das Feuerlöschpulver vermischt werden soll, um als Düngemittel zu dienen, ist die ölhaltige Komponente der Kaliumsulfatrückstände aus der Biodieselproduktion. Die WO 2006/051574 hingegen erläutert Verbesserungen in Zement, dessen Kompressionsstärke durch den Zusatz reinen Glycerins mit einem Anteil anorganischem Alkalimetall-Salz als Zuschlagsstoff bei der Zementherstellung erhöht wird. Dabei wird das als Nebenprodukt der Alkylester-Gewinnung aus pflanzlichen Ölen (bspw. Rapsöl) anfallende Glycerin verwendet, so dass dieses Glycerin natürlich auch Kaliumsulfat (4-6 Gew.-%) enthält. Die in diesen Patentanmeldungen vorgeschlagenen Verwendungen sind allerdings keine wirtschaftlich besonders interessanten Verwendungen des Kaliumsulfats, das lediglich als Düngemittel oder Zuschlagsstoff Verwendung finden soll. Kaliumsulfat kann hingegen ausschließlich in hochreiner Form wirtschaftlich wirklich interessanten weiteren Verwendungen zugeführt werden. Solche Verwendungen umfassen beispielsweise die Verwendung als Anregersalz in der Gipserhärtung oder in Anhydritbindemitteln für Fließestriche. Der Stand der Technik macht aber keinen Vorschlag zur Aufbereitung der Rückstände mit dem Ziel möglichst reinen Kaliumsulfats.

Sofern der Biodieselproduktions-Rückstand überhaupt behandelt wird, steht an erster Stelle die meist übliche unkontrollierte Verbrennung/Erhitzung des Rückstands unter freier Luftzufuhr. Bei Temperaturen von 450 - 600°C entstehen beispielsweise aus organischen Verunreinigungen der Rückstände organische Zersetzungsprodukte wie beispielsweise monomeres Styrol, Benzol, Toluol, Ethylbenzol,-Methylstyrol und die PAKs (Polyaromatische Kohlenwasserstoffe). Darüber hinaus liegen im Rauchgas eines so entstehenden Pyrolysats Fettsäuremethylester, wie das Methylmyristat, Methylpalmitat und Methylstearat, vor. Unkontrolliertes Erhitzen unter oxidierenden Bedingungen führt dazu, dass die organischen Verunreinigungen zu verschiedensten Nebenprodukten zersetzt werden. In der sich ausbildenden reduzierenden Atmosphäre und der innigen Vermischung des feinkörnig vorliegenden Kaliumsulfats mit den anderen Schlammbestandteilen wird der 6-wertig vorliegende Schwefel des Sulfats zu (-)2-wertigem Schwefel, 0-wertigem elementarem Schwefel oder 4-wertigem sulfitischen Schwefelverbindungen reduziert. Wie die organischen Zersetzungsprodukte sind auch diese Verbindungen störende Rückstände und behindern in vielfältiger Weise hochwertige technische Anwendungen des Kaliumsulfats. Insgesamt stören Zersetzungsprodukte (organische oder Schwefelverbindungen) bereits in geringen Konzentrationen die Verwendung des Kaliumsulfats in vielen späteren Anwendungen.

So verursachen organische Verunreinigungen beispielsweise bei Verwendung des Kaliumsulfats als Anreger in wässrigen gips- und anderen calciumsulfathaltigen Suspensionen, in denen das Kaliumsulfat als Abbindebeschleuniger verwendet wird, Änderungen in der Kristallstruktur der sich bildenden Gipskristalle. Dies führt zu unzureichenden Endfestigkeiten, so dass die zugesicherten Eigenschaften der zur Verarbeitung kommenden Mörtel nicht eingehalten werden. Auch der Einsatz als Anreger in Anhydritbindemitteln für Fließestrich ist nur bei entsprechender Reinheit des Kaliumsulfates möglich.

Aufgabe der vorliegenden Erfindung war es daher, einen Verfahrenprozess zu entwickeln und auf dessen Grundlage eine zugehörige Anlage zur Verfügung zu stellen, mit denen die organischen Inhaltsstoffe aus den zu behandelnden Rückstands-Schlämmen aus der Biodieselproduktion möglichst vollständig entfernt werden können, während gleichzeitig verhindert wird, dass es zu einer Zersetzung des anwesenden Sulfats in dem behandelten Stoffgemenge kommt.

Vorteilhaft wäre es insbesondere, wenn der Anteil der noch enthaltenen organischen Verunreinigungen im wiederaufbereiteten Kaliumsulfat auf < 0,001 % sinken würde. Die aus dem Biodieselproduktionsprozess abgetrennten kaliumsulfathaltigen Reststoffe enthalten je nach Produktions- und Aufbereitungsanlage zwischen 5 % und 50 % organischer Bestandteile. Vorteilhafterweise sollte das erfindungsgemäße Verfahren daher diese organischen Bestandteile zu >99,999 % entfernen können. Dabei sollte der Prozess gleichzeitig so durchgeführt werden, dass eine Reduktion des 6-wertigen Schwefels zu niederwertigen (4-, 2-, 0-, (-2)-wertigen) Oxidationsstufen zielsicher verhindert wird.

Vorteilhafterweise sollte das Verfahren auch die effektive Gewinnung von Kaliumsulfat direkt aus der Biodieselproduktion erlauben und/oder die Qualität des so gewonnenen Kaliumsulfats sollte in einem günstigen Verhältnis zu den zur Produktion notwendigen Aufwendungen stehen.

Erfindungsgemäß wird die Aufgabe durch ein Verfahren gemäß Hauptanspruch gelöst.

Die Erfindung betrifft daher ein Verfahren zur Anwendung bei der Aufbereitung von Rückständen aus der Biodieselproduktion zur Isolierung von hochreinem Kaliumsulfat aus kaliumsulfathaltigem Schlamm, wobei das Verfahren in mindestens zwei räumlich und/oder zeitlich getrennten Stufen durchgeführt wird, wobei
- zunächst kaliumsulfathaltiger Schlamm in der ersten Stufe unter nicht oxidierenden Bedingungen - vorzugsweise unter Stickstoffatmosphäre - auf Temperaturen zwischen 400 und 700 °C - vorzugsweise zwischen 450 und 600 °C - erhitzt wird; und
- in einer zweiten Stufe das Produkt aus der ersten Stufe unter oxidierenden Bedingungen auf Materialtemperaturen zwischen 700 und 900 °C - vorzugsweise zwischen 750 und 850 °C - erhitzt wird, dadurch gekennzeichnet, dass der kaliumsulfathaltige Schlamm in der ersten Stufe mit sauerstofffreiem Gas begast wird.

In der ersten Stufe werden die organischen Verunreinigungen aus dem kaliumsulfathaltigen Schlamm bei der vorgegebenen Temperatur und unter den nicht-oxidierenden Bedingungen pyrolisiert und vollständig zu elementarem Kohlenstoff reduziert.

In der zweiten Stufe wird der Kohlenstoff zu Kohlendioxid oxidiert. Dabei wird verfahrenstechnisch angestrebt, dass kein sulfidischer Schwefel (Oxidationsstufe -II) entsteht.

Das erfindungsgemäße Verfahren zeigt eine Reihe von Vorteilen. Zum einen kann mit dem erfindungsgemäßen Verfahren der Anteil der noch enthaltenen organischen Verunreinigungen im wiederaufbereiteten Kaliumsulfat auf <0,01 Gew-% oder sogar < 0,001 Gew-% gesenkt werden, auch wenn der ursprüngliche kaliumsulfathaltige Reststoff bis zu 50 % organischer Bestandteile enthält. Außerdem kann das Verfahren gleichzeitig so durchgeführt werden, dass eine Reduktion des 6-wertigen Schwefels zu niederwertigen (4-, 2-, 0-, (-2)-wertigen) Oxidationsstufen zielsicher verhindert wird. Desweiteren ist das erfindungsgemäße Verfahren trotz deutlicher Energiekosten ein sehr kostengünstiges Verfahren zur Herstellung/Wiedergewinnung eines hochwertigen Grundstoffes. Letztlich kann dieses Verfahren auch als kontinuierliches Verfahren durchgeführt werden und auch zur effektiven Gewinnung von Kaliumsulfat direkt aus der Biodieselproduktion dienen.

Unter "Rückstand aus der Biodieselproduktion" wird im Sinne dieser Erfindung jeder bei der industriellen Biodieselproduktion - meist aus Pflanzenöl - anfallende Rückstand verstanden, der vom Biodiesel abgetrennt wurde. Insbesondere handelt es sich um Reststoffe aus der Veresterungsstufe der Biodieselproduktion wie auch kaliumsulfathaltigen Schlamm.

Unter "kaliumsulfathaltigem Schlamm" wird im Sinne dieser Erfindung ein bei der industriellen Biodieselproduktion anfallender Öl und Kaliumsufat enthaltender Rückstand verstanden, von dem der Biodiesel abgetrennt wurde. Üblicherweise enthält der "kaliumsulfathaltige Schlamm" wie hier definiert zwischen 5 % und 50 % organischer Bestandteile.

Unter "hochreinem Kaliumsulfat" wird im Sinne dieser Erfindung ein nach dem Verfahren aus dem kaliumsulfathaltigen Schlamm isoliertes Kaliumsulfat verstanden, in dem der Anteil der noch enthaltenen organischen Verunreinigungen im aus den Rückständen, insbesondere dem kaliumsulfathaltigen Schlamm, isolierten Kaliumsulfat auf < 0,01 %, vorzugsweise < 0,001 % Gew-% liegt.

Unter "unter nicht oxidierenden Bedingungen" wird im Sinne dieser Erfindung verstanden, dass das Erhitzen des kaliumsulfathaltigen Schlamms in der ersten Stufe so erfolgt, dass die Gasatmosphäre an den Grenzflächen des erhitzten kaliumsulfathaltigen Schlamms - vollständig oder mindestens fast vollständig - keinen Sauerstoff enthält. Vorzugsweise werden unter "nicht oxidierenden Bedingungen" "reduzierende Bedingungen" verstanden. Vorzugsweise wird zur Herstellung "nicht oxidierender Bedingungen" in den Reaktionsraum (beispielsweise in ein erstes Drehrohr oder die oberen Etagen eines Herdofens), in dem die erste Stufe durchgeführt wird, ein unter den herrschenden Bedingungen inertes sauerstofffreies oder zumindest sauerstoffarmes Gas, wie Stickstoff, Kohlendioxid oder Wasserdampf eingeblasen.

Unter "unter Stickstoffatmosphäre" wird im Sinne dieser Erfindung verstanden, dass das Erhitzen des kaliumsulfathaltigen Schlamms in der ersten Stufe so erfolgt, dass die Gasatmosphäre an den Grenzflächen des erhitzten kaliumsulfathaltigen Schlamms - vollständig oder mindestens fast vollständig - aus Stickstoff besteht. Vorzugsweise wird hierzu in den Reaktionsraum (beispielsweise in ein erstes Drehrohr), in dem die erste Stufe stattfindet, als Schutzgas (sauerstofffreies oder -armes) Stickstoff oder Abgas aus einer unterstöchiometrischen Verbrennung eingeblasen.

Unter "unter oxidierenden Bedingungen" wird im Sinne dieser Erfindung verstanden, dass das Erhitzen des Materials (des in der ersten Stufe vorbehandelten kaliumsulfathaltigen Schlamms) in der zweiten Stufe so erfolgt, dass die Gasatmosphäre an den Grenzflächen des erhitzten Materials Sauerstoff enthält, beispielsweise Luft ist. Vorzugsweise wird hierzu in den Reaktionsraum (beispielsweise in ein zweites Drehrohr), in dem die zweite Stufe stattfindet, ein sauerstoffhaltiges Gas, insbesondere Luft, eingeblasen.

Unter "auf Materialtemperaturen... erhitzt" wird im Sinne dieser Erfindung verstanden, dass die Temperatur im Inneren des behandelten Materials (in der ersten Stufe des kaliumsulfathaltigen Schlamms; in der zweiten Stufe des in der ersten Stufe vorbehandelten kaliumsulfathaltigen Schlamms) auf diese Temperatur erhitzt wird.

In einer bevorzugten Ausführungsform des erfindungsgemäßen Verfahrens erfolgt das Erhitzen in der ersten Stufe in einem ersten Reaktionsraum und in der zweiten Stufe in einem zweiten Reaktionsraum und der erste und/oder zweite Reaktionsraum ist so ausgelegt, dass der Transport innerhalb des Reaktors ohne Rückvermischung erfolgt. Dabei kann der erste und/oder zweite Reaktionsraum länglich dimensioniert sein und eine Längsachse aufweisen. Dabei ist es besonders bevorzugt, wenn während des Erhitzens der ersten Stufe im ersten Reaktionsraum und/oder während des Erhitzens in der zweiten Stufe im zweiten Reaktionsraum der behandelte kaliumsulfathaltigen Schlamm in einer Richtung (beispielsweise in Richtung der Längsachse) von einem Ende des jeweiligen Reaktionsraums (dem Anfang) zum anderen Ende des Reaktionsraums (dem Ende) transportiert wird.

Die Rückvermischung kann in länglich dimensionierten Drehrohren mittels entsprechend der Aufgabe angepasster Anzahl von Stauringen und in Etagenöfen durch die angepasste Anzahl von Herdebenen unterdrückt werden. Unter "länglich dimensioniert" wird im Sinne dieser Erfindung verstanden, dass der Gegenstand/Reaktionsraum in einer der drei Dimensionen eine größere Ausdehnung als in den anderen Dimensionen aufweist. Beispiele für länglich dimensionierte Reaktionsräume sind beispielsweise Rohre von Drehrohröfen oder mit mehreren Etagen ausgerüstete Herdöfen.

Unter "Längsachse" wird im Sinne dieser Erfindung die Achse durch einen Körper verstanden, die der Richtung seiner größten Ausdehnung entspricht.

In einer bevorzugten Ausführungsform des erfindungsgemäßen Verfahrens wird der kaliumsulfathaltige Schlamm in der ersten Stufe mit sauerstoffreiem Gas, vorzugsweise mit Stickstoff, insbesondere mit Stickstoff im Verhältnis 0,2 - 0,22 Nm³/kg bezogen auf das Gewicht des behandelten kaliumsulfathaltigen Schlamms, begast.

In einer weiteren bevorzugten Ausführungsform des erfindungsgemäßen Verfahrens wird das in der ersten Stufe entstehende Rauchgas entfernt und einer thermischen Nachverbrennung zugeführt.

In einer bevorzugten Ausführungsform des erfindungsgemäßen Verfahrens wird die Verweilzeit des jeweils behandelten kaliumsulfathaltigen Schlamms in der ersten Stufe so eingestellt, dass am Ende der Behandlung der ersten Stufe der behandelte kaliumsulfathaltige Schlamm weitgehend nur noch Kaliumsulfat und elementaren Kohlenstoff enthält.

In einer bevorzugten Ausführungsform des erfindungsgemäßen Verfahrens wird der kaliumsulfathaltige Schlamm in der zweiten Stufe mit sauerstoffhaltigem Gas - vorzugsweise mit Luft, insbesondere mit Luft im Verhältnis 0,05 - 0,5, vorzugsweise 0,1 - 0,2 Nm³/kg bezogen auf das Gewicht des behandelten kaliumsulfathaltigen Schlamms - begast. Dabei wird vorzugsweise der kaliumsulfathaltige Schlamm in der zweiten Stufe mit sauerstoffhaltigem Gas, vorzugsweise mit Luft, insbesondere mit Luft im Verhältnis 0,05 - 0,5, vorzugsweise 0,1 - 0,2 Nm³/kg bezogen auf das Gewicht des behandelten kaliumsulfathaltigen Schlamms, begast, wobei die Begasung mit sauerstoffhaltigem Gas im Gegenstrom erfolgt, wobei der behandelte kaliumsulfathaltige Schlamm in dem zweiten Reaktionsraum in einer Richtung (beispielsweise einer Längsachse) bewegt wird und vorzugsweise ständig durch entsprechende Einrichtungen umgewälzt wird. Dabei strömt der Strom des sauerstoffhaltigen Gases der Bewegungsrichtung des behandelten kaliumsulfathaltigen Schlamms entgegen. Dadurch erreicht das sauerstoffhaltige entgegenströmende Gas ohne große Diffusionsstrecken die noch nicht oxidierten Kohlenstoff-Partikel im Kaliumsulfat. Damit wird eine kontrollierte Oxidation des Rest Kohlenstoffs im Kaliumsulfat erreicht, ohne dass die feigesetzte Verbrennungswärme zu einer Temperaturerhöhung des Kaliumsulfates über deren Sintertemperatur erfolgt.

In einer bevorzugten Ausführungsform des erfindungsgemäßen Verfahrens beträgt die Verweilzeit des jeweils behandelten kaliumsulfathaltigen Schlamms in der zweiten Stufe 1 h bis 2 h, vorzugsweise 1,25 h bis 1,75 h. Grundsätzlich wird die Verweilzeit so eingestellt, dass der Kohlenstoffgehalt beim Materialaustrag <0,01 % beträgt. Es ist daher besonders bevorzugt, wenn im erfindunsgemäßen Verfahren die Verweilzeit in dieser zweiten Stufe so eingestellt wird, dass der Kohlenstoffgehalt beim Materialaustrag <0,01 % beträgt.

In einer bevorzugten Ausführungsform des erfindungsgemäßen Verfahrens
- erfolgt das Erhitzen in der ersten und zweiten Stufe in einem länglich dimensionierten Reaktionsraum, und
- wird der behandelte kaliumsulfathaltige Schlamm in der ersten und zweiten Stufe im Inneren des jeweiligen Reaktionsraums in Richtung der Längsachse von einem Ende des Reaktionsraums (dem Anfang) zum anderen Ende des Reaktionsraums (dem Ende) transportiert, wobei der behandelte kaliumsulfathaltige Schlamm aus dem Ende des ersten Reaktionsraums in den Anfang des zweiten Reaktionraums transportiert wird, während
- die Verweilzeit des jeweils behandelten kaliumsulfathaltigen Schlamms in der ersten Stufe so eingestellt ist, dass am Ende der Behandlung der ersten Stufe (dem Erreichen des Endes des ersten Reaktionsraums) der behandelte kaliumsulfathaltige Schlamm weitgehend nur noch reines Kaliumsulfat und elementaren Kohlenstoff enthält, und
- die Verweilzeit des jeweils behandelten kaliumsulfathaltigen Schlamms in der zweiten Stufe so eingestellt ist, dass sie 1 h bis 2 h, vorzugsweise 1,25 h bis 1,75 h beträgt.

In einer bevorzugten Ausführungsform des erfindungsgemäßen Verfahrens erfolgt das Erhitzen in der ersten Stufe und/oder der zweiten Stufe in einem - vorzugsweise mit Stauringen ausgelegtem - Drehrohr, vorzugsweise in einem über die Außenwand beheizten Drehrohr eines Drehrohrofens,
wobei vorzugsweise das Drehrohr oder das Rohr des Drehrohrofens während des Erhitzens der ersten und/oder der zweiten Stufe oder während der ersten und/oder zweiten Stufe um die Längsachse rotiert,
und/oder das Drehrohr oder der Drehrohrofen auf der Innenseite zum Innenraum auskragende Vorrichtungen aufweist, vorzugsweise über die gesamte Rohrlänge verteilt zum Innenraum auskragende Vorrichtungen aufweist, wobei diese zum Innenraum auskragende Vorrichtungen beispielsweise als Hubschaufeln ausgeführt sind, und/oder vorzugsweise die zum Innenraum auskragende Vorrichtungen den behandelten kaliumsulfathaltigen Schlamm in Richtung der Längsachse transportieren.

In einer bevorzugten Ausführungsform des erfindungsgemäßen Verfahrens erfolgt das Erhitzen in der ersten Stufe und/oder zweiten Stufe in einem Herdofen, vorzugsweise in einem mit mehreren Etagen dimensionierten Herdofen, vorzugsweise in einem mit Rührarmen ausgestatteten Herdofen mit Gaseintritts- und Abzugsöffnungen die die Wärmezufuhr entlang des Materialtransportes steuern können.

Eine Anlage, die zur Durchführung eines erfindungsgemäßen Verfahrens geeignet ist, umfasst zwei kommunizierende länglich dimensionierte Reaktionsräume, den ersten Reaktionsraum und den zweiten Reaktionsraum, wobei jeder Reaktionsraum jeweils separat erhitzbar mit Gas beschickbar ist. Es ist entschieden bevorzugt, wenn der erste und/oder zweite Reaktionsraum so ausgelegt ist, dass der Transport innerhalb des Reaktors ohne Rückvermischung erfolgt. Es ist auch bevorzugt, wenn der erste Reaktionsraum geeignet ist, den behandelten kaliumsulfathaltigen Schlamm in einer Richtung (beispielsweise der Längsachse) von einem Ende des ersten Reaktionsraums (dem ersten Anfang) zum anderen Ende des ersten Reaktionsraums (dem ersten Ende) zu transportieren, so dass der zum ersten Ende des ersten Reaktionsraums transportierte behandelte kaliumsulfathaltige Schlamm im Anfang des zweiten Reaktionsraums (dem zweiten Anfang) eingetragen und in diesem zum Ende des zweiten Reaktionsraums (dem zweiten Ende) transportiert werden kann.

In einer bevorzugten Ausführungsform der Anlage weist das erste Rohr einen zur Beschickung des ersten Rohrs mit sauerstoffreiem Gas, vorzugsweise mit Stickstoff, geeigneten Gasanschluss und/oder das zweite Rohr einen zur Beschickung des zweiten Rohrs mit sauerstofhaltigem Gas, vorzugsweise mit Luft, geeigneten Gasanschluss auf. Dabei ist es besonders bevorzugt, wenn der Gasanschluss zur Beschickung des zweiten Reaktionsraums mit sauerstoffhaltigem Gas, vorzugsweise mit Luft, in unmittelbarer Nähe des Endes des zweiten Reaktionsraums (des zweiten Endes) angebracht ist.

In einer bevorzugten Ausführungsform der Anlage ist der erste Reaktionsraum so hergerichtet, dass sein Innenraum auf 450°C bis 600°C erhitzt werden kann, und/oder der zweite Reaktionsraum so hergerichtet, dass sein Innenraum auf 750°C bis 850°C erhitzt werden kann.

In einer bevorzugten Ausführungsform der Anlage ist der erste und/oder zweite Reaktionsraum als Drehrohr, vorzugsweise als ein über die Außenwand beheizbares Drehrohr eines Drehrohrofens ausgeführt, wobei vorzugsweise das Drehrohr oder das Rohr des Drehrohrofens während des Erhitzens der ersten und/oder der zweiten Stufe oder während der ersten und/oder zweiten Stufe um die Längsachse rotiert, und/oder das Drehrohr oder der Drehrohrofen auf der Innenseite zum Innenraum auskragende Vorrichtungen aufweist, vorzugsweise über die gesamte Rohrlänge verteilt zum Innenraum auskragende Vorrichtungen aufweist, wobei diese zum Innenraum auskragenden Vorrichtungen beispielsweise als Hubschaufeln ausgeführt sind, und/oder vorzugsweise die zum Innenraum auskragende Vorrichtungen den behandelten kaliumsulfathaltigen Schlamm in Richtung der Längsachse transportieren.

In einer bevorzugten Ausführungsform der Anlage ist der erste und/oder zweite Reaktionsraum als länglich dimensionierter Herdofen, vorzugsweise als länglich dimensionierter Herdofen mit mehreren räumlich getrennten Wärmequellen, die vorzugsweise entlang der Längsachse des länglich dimensionierten Herofens angeordnet sind, ausgeführt.

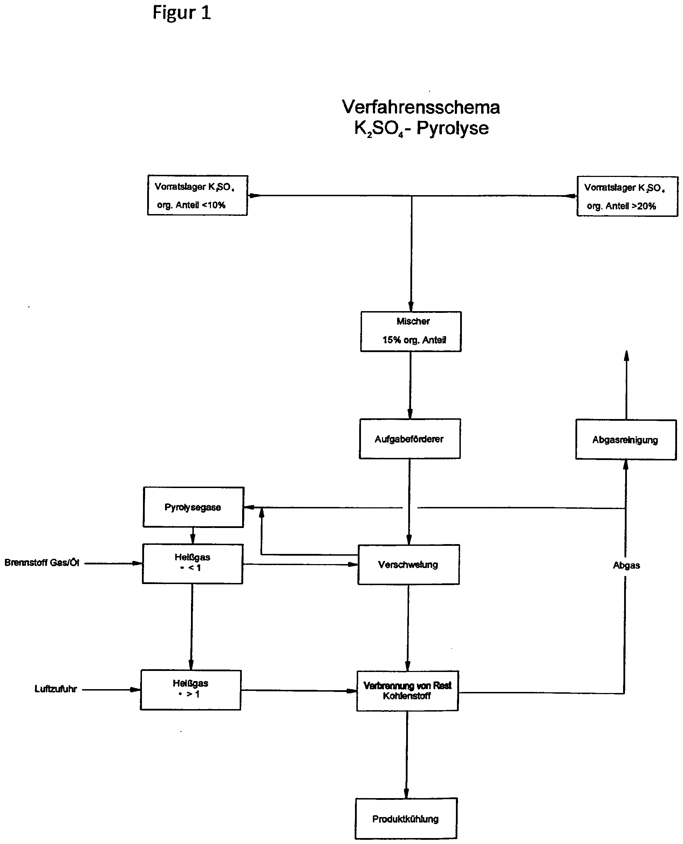

Der folgende Abschnitt beschreibt ein Fließbild (Fig. 1) mit dem das Verfahrensprinzip der Erfindung beispielhaft erläutert wird, das aber keinesfalls als beschränkend zu verstehen ist.

### BEISPIELE

### Beispiel 1: Beispielhaftes Verfahren mit Fließbild nach Fig. 1

Wie in Fig. 1 ausgeführt, werden aus einem ersten Vorratslager kaliumsulfathaltige Rückstände aus der Biodieselproduktion mit einem organischen Bestandteil < 10 % mit kaliumsulfathaltigen Rückständen aus der Biodieselproduktion mit einem organischen Bestandteil > 20% aus einem zweiten Vorratslager in einem Mischer gemischt, so dass ein Rückstand mit ca. 15 % organischem Bestandteil entsteht. Dieser Rückstand wird über einen Aufgabeförderer in ein erstes Drehrohr oder die obere Etage eines Herdofens eingebracht und dort unter reduzierenden Bedingungen durch Einblasen von Abgas aus einer unterstöchiometrischen Verbrennung verschwelt.

Das aus dieser Verschwelung und Pyrolyse entstehende Abgas/Pyrolysegas wird gesammelt, mit in einem späteren Prozess entstehenden Abgas gemischt und über das der Verschwelungsstufe zugesetzte nicht oxidierende Heißgas teilweise dem Verschwelungsprozess zugeführt. Das Heißgas wird dabei für die Verschwelung/Pyrolyse erhitzt. Der andere Teil wird dem oxidierenden Heißgas für die zweite Stufe zugeführt.

Der pyrolysierte/verschwelte Rückstand wird in ein zweites Drehrohr oder eine untere Etage des Herdofens eingebracht und dort einer vollständigen Verbrennung des Restkohlenstoffes unterworfen. Dem dazu eingebrachten oxidiernden Heißgas wird zuvor Luft zugeführt.

Die entstehenden Abgase werden entweder erneut den in der Reaktion verwendeten Heißgasen zugeführt (s. oben) oder gereinigt.

## Patentansprüche

1. Verfahren zur Anwendung bei der Aufbereitung von Rückständen aus der Biodieselproduktion zur Isolierung von hochreinem Kaliumsulfat aus kaliumsulfathaltigem Schlamm, **dadurch gekennzeichnet, dass** das Verfahren in zwei räumlich und/oder zeitlich getrennten Stufen durchgeführt wird, wobei
• zunächst kaliumsulfathaltiger Schlamm in der ersten Stufe unter nicht oxidierenden Bedingungen auf Temperaturen zwischen 400 und 700 °C erhitzt wird; und
• in einer zweiten Stufe das Produkt aus der ersten Stufe unter oxidierenden Bedingungen auf Temperaturen zwischen 700 und 900°C erhitzt wird,
**dadurch gekennzeichnet, dass** der kaliumsulfathaltige Schlamm in der ersten Stufe mit sauerstoffreiem Gas begast wird.

2. Verfahren nach Anspruch 1, **dadurch gekennzeichnet, dass**
• in der ersten Stufe
∘ das Erhitzen des kaliumsulfathaltigen Schlamms unter Stickstoffatmosphäre erfolgt und/oder
∘ der kaliumsulfathaltige Schlamm auf Temperaturen zwischen 450 und 600 °C erhitzt wird und/oder
• in der zweiten Stufe das Produkt aus der ersten Stufe auf Temperaturen zwischen 750 und 850 °C erhitzt wird.

3. Verfahren nach einem der Ansprüche 1 bis 2, **dadurch gekennzeichnet, dass** der kaliumsulfathaltige Schlamm in der ersten Stufe mit Stickstoff, insbesondere mit Stickstoff im Verhältnis 0,2 - 0,22 Nm³/kg bezogen auf das Gewicht des behandelten kaliumsulfathaltigen Schlamms, begast wird.

4. Verfahren nach einem der Ansprüche 1 bis 3, **dadurch gekennzeichnet, dass** das in der ersten Stufe entstehende Rauchgas entfernt und einer thermischen Nachverbrennung zugeführt wird.

5. Verfahren nach einem der Ansprüche 1 bis 4, **dadurch gekennzeichnet, dass** der kaliumsulfathaltige Schlamm in der zweiten Stufe mit sauerstoffhaltigem Gas - vorzugsweise mit Luft, insbesondere mit Luft im Verhältnis 0,05 - 0,5, vorzugsweise 0,1 - 0,2 Nm³/kg bezogen auf das Gewicht des behandelten kaliumsulfathaltigen Schlamms - begast wird.

6. Verfahren nach Anspruch 5, **dadurch gekennzeichnet, dass** der kaliumsulfathaltige Schlamm in der zweiten Stufe mit sauerstoffhaltigem Gas - vorzugsweise mit Luft, insbesondere mit Luft im Verhältnis 0,05 - 0,5, vorzugsweise 0,1 - 0,2 Nm³/kg bezogen auf das Gewicht des behandelten kaliumsulfathaltigen Schlamms - begast wird, wobei die Begasung mit sauerstoffhaltigem Gas im Gegenstrom erfolgt, wobei der behandelte kaliumsulfathaltige Schlamm in dem zweiten Reaktionsraum in einer Richtung bewegt wird, und vorzugsweise ständig durch entsprechende Einrichtungen umgewälzt wird, wobei der Strom des sauerstoffhaltigen Gases der Bewegungsrichtung des behandelten kaliumsulfathaltigen Schlamms entgegenströmt.

7. Verfahren nach einem der Ansprüche 1 bis 6, **dadurch gekennzeichnet, dass** die Verweilzeit des jeweils behandelten kaliumsulfathaltigen Schlamms in der zweiten Stufe 1 h bis 2 h, vorzugsweise 1,25 h bis 1,75 h beträgt.

8. Verfahren nach einem der Ansprüche 1 bis 7, **dadurch gekennzeichnet, dass** das Erhitzen in der ersten Stufe und/oder der zweiten Stufe in einem - vorzugsweise mit Stauringen ausgelegtem - Drehrohr, vorzugsweise in einem über die Außenwand beheizten - vorzugsweise mit Stauringen ausgelegtem - Drehrohr eines Drehrohrofens erfolgt,
vorzugsweise **dadurch gekennzeichnet, dass** das Drehrohr oder das Rohr des Drehrohrofens während des Erhitzens der ersten und/oder der zweiten Stufe oder während der ersten und/oder zweiten Stufe um die Längsachse rotiert;
und/oder **dadurch gekennzeichnet, dass** das Drehrohr oder der Drehrohrofen auf der Innenseite zum Innenraum auskragende Vorrichtungen aufweist, vorzugsweise über die gesamte Rohrlänge verteilt zum Innenraum auskragende Vorrichtungen aufweist, wobei diese zum Innenraum auskragende Vorrichtungen beispielsweise als Hubschaufeln ausgeführt sind, und/oder vorzugsweise die zum Innenraum auskragende Vorrichtungen den behandelten kaliumsulfathaltigen Schlamm in Richtung der Längsachse transportieren.

9. Verfahren nach einem der Ansprüche 1 bis 8, **dadurch gekennzeichnet, dass** das Erhitzen in der ersten Stufe und/oder zweiten Stufe in einem Herdofen, vorzugsweise in einem mit mehreren Etagen dimensionierten Herdofen, vorzugsweise in einem mit Rührarmen ausgestatteten Herdofen mit Gaseintritts- und Abzugsöffnungen, die die Wärmezufuhr entlang des Materialtransportes steuern können, erfolgt.

## Claims

1. Method for the application in the treatment of residues from biodiesel production for the isolation of high-purity potassium sulfate from sludge containing potassium sulfate, **characterized in that** the method is carried out in two steps, spatially and/or temporally separated, wherein
- firstly the sludge containing potassium sulfate is heated in the first step to temperatures between 400 and 700 °C under non-oxidizing conditions; and
- in a second step, the product from the first step is heated to temperatures between 700 and 900 °C under oxidizing conditions,
**characterized in that** the sludge containing potassium sulfate is gassed with oxygen-free gas in the first step.

2. Method according to claim 1, **characterized in that**
- in the first step,
- the sludge containing potassium sulfate is heated in a nitrogen atmosphere and/or
- the sludge containing potassium sulfate is heated to temperatures between 450 and 600 °C and/or
- in the second step, the product from the first step is heated to temperatures between 750 and 850 °C.

3. Method according to one of claims 1 to 2, **characterized in that** the sludge containing potassium sulfate is gassed in the first step with nitrogen, in particular with nitrogen in the ratio of 0.2-0.22 Nm³/kg, based on the weight of the treated sludge containing potassium sulfate.

4. Method according to one of claims 1 to 3, **characterized in that** the flue gas generated in the first step is removed and fed to a thermal afterburning.

5. Method according to one of claims 1 to 4, **characterized in that** the sludge containing potassium sulfate is gassed in the second step with oxygen-containing gas, preferably with air, in particular with air in the ratio 0.05-0.5, preferably 0.1-0.2 Nm³/kg, based on the weight of the treated sludge containing potassium sulfate.

6. Method according to claim 5, **characterized in that** the sludge containing potassium sulfate in the second step is gassed with oxygen-containing gas, preferably with air, preferably with air, in particular with air in the ratio 0.05-0.5, preferably 0.1-0.2 Nm³/kg, based on the weight of the treated sludge containing potassium sulfate, wherein the gassing with oxygen-containing gas takes place in the counter-flow, wherein the treated sludge containing potassium sulfate is moved in one direction in the second reaction chamber, and preferably is continuously circulated through corresponding devices, wherein the flow of the oxygen-containing gas flows against the movement direction of the treated sludge containing potassium sulfate.

7. Method according to one of claims 1 to 6, **characterized in that** the residence time of the respectively treated sludge containing potassium sulfate in the second step is 1 h to 2 h, preferably 1.25 h to 1.75 h.

8. Method according to one of claims 1 to 7, **characterized in that** the heating in the first step and/or the second step is carried out in a rotary tube, preferable configured with filling rings, preferably in a rotary tube of a rotary kiln heated via the outer wall, preferably configured with filling rings,
preferably **characterized in that** the rotary tube or the tube of the rotary kiln rotates about the longitudinal axis during the heating of the first and/or the second step or during the first and/or second step;
and/or **characterized in that** the rotary tube or the rotary kiln has devices projecting outward on the inner side to the interior, preferably has devices projecting outwards to the interior distributed over the entire length of the tube, wherein these devices projecting outward to the interior are configured, for example, as lifting blades, and/or preferably the devices projecting outward to the interior transport the treated sludge containing potassium sulfate in the direction of the longitudinal axis.

9. Method according to one of claims 1 to 8, **characterized in that** the heating in the first step and/or the second step is carried out in a hearth furnace, preferably in a hearth furnace dimensioned with multiple stages, preferably in a hearth furnace with gas inlet and outlet openings equipped with stirrer arms, which can control the heat supply along the material transport.

## Revendications

1. Procédé destiné à être utilisé lors du traitement de résidus provenant de la production de biodiesel pour isoler du sulfate de potassium extra-pur à partir de boues contenant du sulfate de potassium, **caractérisé en ce qu'**on réalise le procédé en deux étapes séparées dans l'espace et/ou dans le temps,
- lors duquel, dans la première étape, on fait chauffer des boues contenant du sulfate de potassium sous des conditions non oxydantes à des températures comprises entre 400 et 700 ° C ; et
- dans une deuxième étape, on fait chauffer le produit issu de la première étape sous des conditions oxydantes à des températures comprises entre 700 et 900 °C,
**caractérisé en ce que** dans la première étape, on injecte dans les boues contenant du sulfate de potassium un gaz exempt d'oxygène.

2. Procédé selon la revendication 1, **caractérisé en ce que**
- dans la première étape
- l'échauffement des boues contenant du sulfate de potassium s'effectue sous atmosphère azotée et/ou
- on fait chauffer les boues contenant du sulfate de potassium à des températures comprises entre 450 et 600 °C et/ou
- dans la deuxième étape, on fait chauffer le produit issu de la première étape à des températures comprises entre 750 et 850 °C.

3. Procédé selon l'une quelconque des revendications 1 ou 2, **caractérisé en ce que** dans la première étape, on injecte de l'azote dans les boues contenant du sulfate de potassium, notamment de l'azote dans une proportion de 0,2 à 0,22 Nm³/kg, en rapport au poids des boues contenant du sulfate de potassium traitées.

4. Procédé selon l'une quelconque des revendications 1 à 3, **caractérisé en ce qu'**on élimine les gaz de fumée produits dans la première étape et on les amène vers une postcombustion thermique.

5. Procédé selon l'une quelconque des revendications 1 à 4, **caractérisé en ce que** dans la deuxième étape, on injecte dans les boues contenant du sulfate de potassium un gaz contenant de l'oxygène (de préférence de l'air, notamment de l'air dans une proportion de 0,05 à 0,5, de préférence de 0,1 à 0,2 Nm³/kg, en rapport au poids des boues contenant du sulfate de potassium traitées).

6. Procédé selon la revendication 5, **caractérisé en ce que** dans la deuxième étape, on injecte dans les boues contenant du sulfate de potassium un gaz contenant de l'oxygène (de préférence de l'air, notamment de l'air dans une proportion de 0,05 à 0,5, de préférence de 0,1 à 0,2 Nm³/kg, en rapport au poids des boues contenant du sulfate de potassium traitées), l'injection de gaz contenant de l'oxygène s'effectuant à contre-courant, dans le deuxième espace de réaction, les boues contenant du sulfate de potassium traitées étant déplacées dans une direction et étant de préférence brassées en continu par des systèmes correspondants, le flux du gaz contenant de l'oxygène circulant à contre-courant de la direction de déplacement des boues contenant du sulfate de potassium traitées.

7. Procédé selon l'une quelconque des revendications 1 à 6, **caractérisé en ce que** le temps de séjour dans la deuxième étape des boues contenant du sulfate de potassium respectivement traitées est de 1h à 2h, de préférence de 1h25 à 1h75.

8. Procédé selon l'une quelconque des revendications 1 à 7, **caractérisé en ce que** l'échauffement dans la première étape et/ou dans la deuxième étape s'effectue dans un tube rotatif (conçu de préférence avec des bagues de retenue), de préférence dans un tube rotatif chauffé par l'intermédiaire des parois extérieures (conçu de préférence avec des bagues de retenue) d'un four tubulaire rotatif,
caractérisé de préférence **en ce que** pendant l'échauffement de la première et/ou de la deuxième étape et/ou pendant la première et/ou la deuxième étape, le tube rotatif ou le tube du four tubulaire rotatif tourne autour de l'axe longitudinal ;
et/ou **caractérisé en ce que** sur la face intérieure, le tube rotatif ou le four tubulaire rotatif comporte des dispositifs saillant vers l'espace intérieur, de préférence des dispositifs saillant vers l'espace intérieur distribués sur tout la longueur du tube, lesdits dispositifs saillant vers l'espace intérieur étant réalisés par exemple sous la forme de pales de levage et/ou de préférence les dispositifs saillant vers l'espace intérieur transportant les boues contenant du sulfate de potassium traitées dans la direction de l'axe longitudinal.

9. Procédé selon l'une quelconque des revendications 1 à 8, **caractérisé en ce que** l'échauffement dans la première étape et/ou dans la deuxième étape s'effectue dans un four à sole, de préférence dans un four à sole dimensionné avec plusieurs étages, de préférence dans un four à sole équipé de bras agitateurs, avec des orifices d'entrée et d'extraction de gaz qui sont aptes à commander l'alimentation thermique le long du transport de la matière.
